(19) Europäisches Patentamt
European Patent Office
Office européen des brevets

(11) **EP 3 211 122 A1**

(12) **EUROPEAN PATENT APPLICATION**

(43) Date of publication:
**30.08.2017 Bulletin 2017/35**

(51) Int Cl.:
***C23C 18/12*** (2006.01)   ***B23K 26/08*** (2014.01)

(21) Application number: **16156867.0**

(22) Date of filing: **23.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Fraunhofer-Gesellschaft zur Förderung der angewandten Forschung e.V.**
**80686 München (DE)**

• **DSM IP Assets B.V.**
**6411 TE  Heerlen (NL)**

(72) Inventor: **Stollenwerk, Jochen**
**6291 AV Vaals (NL)**

(74) Representative: **Gagel, Roland**
**Patentanwalt Dr. Roland Gagel**
**Landsberger Strasse 480a**
**81241 München (DE)**

(54) **A METHOD OF SINTERING, CRYSTALLIZING AND/OR CROSSLINKING OF A COATING MATERIAL ON A SUBSTRATE**

(57)    The present invention relates to a method of at least one of sintering, crystallization and/or crosslinking of a coating material (2) on a substrate (1) with laser radiation. The coating material (2) is scanned with a laser beam (8) along overlapping processing traces, said scanning being performed by moving the laser beam (8) with a first speed in a first direction while the substrate (1) is moved with a second speed slower than the first speed relative to the laser beam (8) or vice versa in a second direction perpendicular to the first direction. The intensity of the laser beam (8), the first speed and a ratio of the first speed and the second speed are selected such that the overlap of the processing traces on the coating material (2) results in local peak temperatures of the coating material (2) above a threshold temperature (17) which are repeatedly reached within a time period (18). The peak temperatures and time period (18) are selected to achieve said sintering, crystallizing and/or crosslinking of the coating material. With the proposed method the thermal load on the substrate is substantially reduced compared to processes using continuous heating.

Fig. 7

EP 3 211 122 A1

**Description**

**Technical Field**

The present invention relates to a method of at least one of sintering, crystallizing and/or crosslinking of a coating material on a substrate, in particular on a substrate having a temperature stability point which is lower than a temperature required for said sintering, crystallizing and/or crosslinking.

Wet-chemical processes based on spin-, dip-, roll- or spray-coating for the low-cost production of functional coatings on a substrate require thermal treatments after material deposition. Within these thermal post-treatments the final conversion into the functionalized coating is realized by various processes taking place within the material, for example by drying of solvents, removal of additives, network-formation, sintering and/or crystallization of the coating material. The formation of a porous coating with optical functionality, for example antireflective properties, can be realized by applying a short-time treatment with high temperatures. Within industrially established processes conventional furnaces are used for the heating. The major challenge regarding the heat treatment is the fact that the deposited material must be converted into a stable, abrasion resistant coating with the desired properties. This step traditionally requires long processing times in combination with high temperatures.

Due to the required long processing times in combination with high temperatures the substrate material, e.g. glass or polymer, is subject to a high thermal load. This needs to be considered for the selection of suitable substrate materials and for the overall process design in order to avoid negative effects of the substrate. All assembling processes involving parts with lower thermal stability have to be carried out after the thermal treatment.

Typically, sol-gel based coatings are thermally processed within a furnace. With the conventional furnace treatment the optional removal of optionally contained additives and the network-formation (crosslinking) and sintering of the inorganic sol-gel based matrix material is done during long holding times at elevated temperature in the range of minutes to hours. An example for such a thermal treatment is shown e.g. in Mahadik et al., "High performance single layer nano-porous antireflection coatings on glass by sol-gel process for solar energy applications", Solar Energy Materials & Solar Cells 140, 61-68 (2015). The sol-gel coating was deposited by dip-coating on a glass substrate and immediately heat treated at 100°C for one hour and then at 400°C for two hours in a furnace. Such furnace based thermal treatments at high temperatures of ≥ 400°C and holding times in the range of several minutes to hours are applied in order to convert the deposited materials into functionalized coatings. The conventional process design hence does not allow to apply the coating process on assembled components with parts that have a temperature stability point below the processing temperature, e.g. an assembled display or photovoltaic modules.

The production of an optical coating by the described sol-gel route is also described e.g. in US 2010/0015433 A1. In this document an anti-reflective coating is achieved by forming a porous coating with an effective refractive index lower than that of the substrate. Typically, these antireflective systems comprise nanoparticles with an appropriate binder. The document describes a method of preparing an anti-reflective coating in which the binder is hydrolyzed in the presence of the nanoparticles using an acid catalyst. The document uses a coating based on a coating composition with particles with an organic/ inorganic core-shell structure, where the organic core is removed during curing of the coating. Due to the required removal of the organic core, it is expected that the curing typically is performed in a furnace at high temperatures, such as above 600°C, for long holding times of several minutes to achieve a suitable coating.

It is an object of the present invention to provide a method of at least one of sintering, crystallizing and crosslinking of a coating material forming a coating on a substrate without applying a high thermal load on the substrate underlying the coating or attached components. The method should allow for using substrates or substrates with attached components, which substrates or attached components have a temperature stability point T2, which is lower than the temperature T1 required for said sintering, crystallizing and/or crosslinking. The proposed method furthermore should allow treatment times shorter than the treatment times of conventional processes using furnace heating.

**Description of the Invention**

The object is achieved with the method according to claim 1. Advantageous embodiments of the method are subject matter of the dependent claims or are described in the subsequent portions of the description.

In the proposed method the coating is scanned with a laser beam along overlapping processing traces which are arranged side by side (partially overlapping each other) and are preferably formed of straight paths parallel to each other. A processing trace is the area covered by the laser beam on the coating, when the laser beam is scanned along a scanning line from one end of the scanned area of the coating to the other end. The scanning is performed by moving the laser beam with a first speed in a first direction while the substrate with the coating is moved with a second speed slower than the first speed relative to the laser beam or vice versa in a second direction at an angle to the first direction. This angle is preferably selected between 80 and 100°. In the proposed method the intensity of the laser beam, the first speed and the ratio of the first speed and the second speed are selected such that the overlap of the processing traces on the coating results in local peak temperatures of the coating above a threshold temperature which are repeatedly reached within a time period also referred to as threshold time period in the present patent application. This repetition of peak temperatures above the threshold temperature is due to the overlap of the subsequently processed traces. Between the peak temperatures the temperature of the coating substantially decreases to temperatures lower than the threshold temperature. The peak temperatures and the threshold time period are selected such that said sintering, crystallizing and/or crosslinking of the coating material is achieved.

In contrast to the known methods of heat treatment for sintering, crystallizing and/or crosslinking of coating materials in a furnace, the temperature T1 required for the sintering, crystallizing and/or crosslinking is not continuously maintained during the threshold time period. Instead of the known methods, the coating is only heated repeatedly for very short times - corresponding to the short interaction times with the laser beam - to temperatures typically higher than the required temperature T1 during the threshold time period. This threshold time period is substantially shorter than the holding times used with furnace heating and is typically less than 100 ms. The time during which the laser beam heats the coating material at a fixed position within one processing trace to the peak temperature, in this patent application also called active heating time, is with usually < 10 $\mu$s significantly shorter. This is the time of interaction of the laser beam with the fixed position during the scanning movement. The times for which the peak temperatures are reached, the threshold time period and the height of the peak temperatures are controlled by the first and second scanning or moving speeds and the laser intensity of the laser radiation. The local peak temperatures cannot be measured directly, but can be determined by simulations, e.g. simulations based on a numerical solution of the heat equation. The proposed method enables the sintering, crystallizing and/or crosslinking of a coating material on a substrate without negative effects on the substrate material, e.g. glass, and underlying components with low temperature stability. The substrate and/or components attached to the substrate may have a temperature stability point T2 which is lower than the temperature T1 required for the sintering, crystallizing and/or crosslinking. The temperature stability point T2 is the temperature above which the substrate or attached components may melt or being destroyed by cracks or similar effects when being continuously exposed to temperatures > T2 for a longer period required for the sintering, crystallizing and/or crosslinking, e.g. for a period longer than 30 s. With the proposed method the temperature of the substrate and attached components does not reach such temperatures for a longer period. This is due to the specifically adapted temperature-time profiles of the proposed method with high peak temperatures, preferably > 1000°C, and very short local interaction times of the laser with the coating material resulting in a very small temperature penetration depth in the range of some 100 $\mu$m into the underlying substrate. The substrate material and underlying components are thus not negatively influenced. On the other hand it has been observed that the sintering, crystallization and/or crosslinking is achieved on a short time scale by repeatedly heating the coating to peak temperatures higher than the temperatures typically required for the sintering, crystallization and/or crosslinking during a short threshold time. The process e.g. enables the removal of additives as well as the sintering of a sol-gel coating matrix without the above described negative effects, although the generated temperature at the substrate surface significantly exceeds the temperature stability point of the substrate material.

The laser radiation is preferably provided with an intensity in the range of $1\times10^5$ to $5\times10^7$ W/cm$^2$ for the laser treatment. The small heat-affected zone in the substrate is realized by a high scanning speed in the range of preferably between 50 and 2500 m/s. These high scanning speeds lead to very short interaction times in the range of $1\times10^{-3}$ to $1\times10^{-7}$ s within one single line treatment of the laser beam. The short interaction time results in short temperature hold times and small heat-affected zones.

The threshold temperature relates to the temperature value that needs to be exceeded in order to initiate the process responsible for the conversion of the coating, i.e. for the sintering, crystallization and/or crosslinking. Preferably the threshold temperature is selected to be above or equal 600°C, e.g. in the case of a silica sol-gel matrix material. The required threshold temperature together with the threshold time period can be determined for each application with preliminary tests in which the laser power and/or beam diameter and the first and second scanning speeds are varied.

The overlap of the processing traces is preferably selected such that each processing trace overlaps with a number of > 15, preferably > 25, more preferably > 40, more preferably > 50 further processing traces. On the other hand, the overlap of the processing traces is preferably selected such that each processing trace overlaps with a number of <150 further processing trace. With such a selection most of the required threshold time periods for different types of coatings can be achieved without negatively influencing the substrate or attached components.

The relation between the active heating time in which the laser beam heats the coating material at a fixed position and the time between two heating events at this fixed position is preferably selected to be lower than $3 \times 10^{-3}$.

With the proposed method a reduced thermal load of the underlying substrate is achieved by an adapted temperature-time profile including high peak temperatures and deposition of the energy in small amounts with laser radiation. The method can be further improved by applying forced cooling to the coating. This forced cooling which is preferably performed with a process gas like $N_2$, $O_2$ or air further reduces the heat penetration depth. Also other gases, in particular inert gases like Ar, may be used for the forced cooling. In addition, it was surprisingly observed that the process gas has a positive effect on the sintering process of the coating material. It could be speculated - without being limited thereto - that this related to a reduction of the time constant of the sintering process, e.g. by an advantageous coating structure generated by accelerated removal of additives.

In order to realize a sufficient number of overlapping treatments at an industrially relevant processing rate the laser beam profile is preferably formed to have an intensity distribution with a larger extension in the second than in the first direction on the coating. The laser beam profile may also be formed to have a top-hat shaped intensity distribution on the coating.

The proposed method can be used to sinter, crystallize and/or crosslink any types of coating materials which absorb the applied laser radiation, e. g. laser radiation in the infrared wavelength range. The method is in particular suitable for curing of coatings based on sol-gel materials (dispersions with molecular precursors) optionally also containing additives (e.g. polymers) including single- or multilayer coatings. The proposed method is preferably applied in combination with wet-chemical deposition processes for the production of functional coatings on glass and other substrates. These substrates can optionally be temperature sensitive, i.e. substrates with a low thermal stability point.

## Brief Description of the Drawings

The proposed method is described in the following by way of examples in connection with the accompanying figures. The figures show:

Fig. 1     a schematic diagram of a curing process of a sol-gel matrix on a substrate according to the prior art;
Fig. 2     a schematic diagram of the temperature penetration depth when using the proposed method;
Fig. 3     a schematic diagram of a beam guiding system for performing the proposed method;
Fig. 4     a schematic diagram of the temperature-time profile used when curing the coating in a furnace according to the prior art;
Fig. 5     a simulation of the temperature of the coating when using the proposed method;
Fig. 6     a schematic diagram of the temperature-time profile at a fixed position on the substrate coating when using the proposed method; and
Fig. 7     two examples for beam profiles of the laser beam used according to the proposed method.

## Description of Preferred Embodiments

The proposed method is described in the following by way of examples, mainly based on the application of curing of a wet-chemically applied sol-gel coating on a substrate. It is however obvious that the examples may also be applied to other types of coatings on a substrate.

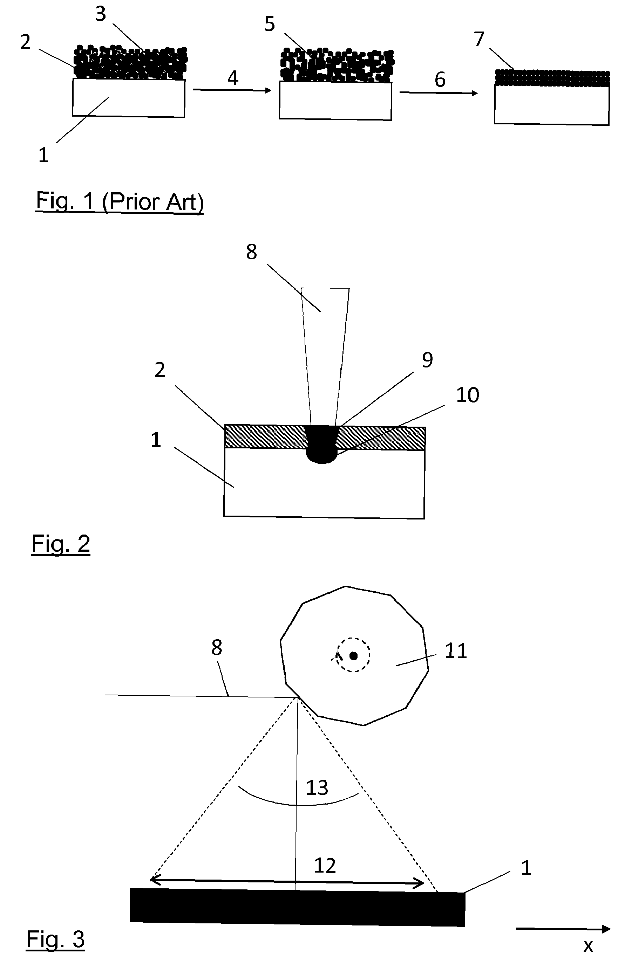

Figure 1 shows a schematic diagram of a prior art process of curing a sol-gel matrix 2 deposited on a substrate 1. The sol-gel matrix 2 contains additives 3 which are first removed in a heating step 4 in an appropriate furnace. The removal of the additives 3 results in a higher porosity 5 of the coating material. The coating material then further heated in a sintering step 6 to sinter the matrix material. This is typically performed in the same furnace. The sintering results in a coating of sintered silica material 7 with a defined porosity. The sintering process in the furnace requires long holding times in the range of minutes to hours and does not allow to cure a coating on a temperature sensitive substrate or on a substrate with assembled components having a temperature stability point below the process temperature.

With the method according to the present invention the curing can be performed in a substantially shorter time without affecting substrates or attached components having low temperature stability points. Both steps of removing of additives and sintering are performed in the same treatment step. The method allows the removal of additives including residual solvent and/or polymeric species as well as the sintering of the sol-gel coating matrix without negative effects on the substrate material and underlying components with low temperature stability by application of a specifically adapted temperature-time profile with high peak temperatures of preferably > 1000°C and very small temperature penetration depths in the range of some 100 $\mu$m. This is schematically indicated in figure 2 showing a schematic diagram of the temperature penetration depth perpendicular to the scan direction (first direction) of the laser beam. The figure depicts the substrate 1 with the applied sol-gel matrix 2, the scanning laser beam 8, the heated zone 9 in the coating with T > 1000°C and the heated zone 10 in the substrate with a depth of < 500 $\mu$m. The small heat affected zone in the substrate 1 is realized by a high scanning speed (first speed) of the laser beam 8 in the range of 50 to 2500 m/s. The high scanning speed leads to short interaction times of the laser beam 8 with the coating which result in short temperature hold times and the small heat affected zones.

For scanning in the first direction (x-direction) a polygon scanning system is preferably used as schematically shown in figure 3. The laser beam 8 is reflected by the rotating polygon mirror 11 of this scanning system to the substrate, thereby moving along one scanning line. The length of the scanning line, also called scanning width 12, is indicated in the figure as well as the scanning angle 13. At the same time the substrate 1 is moved relative to the polygon mirror 11 in the second direction (y-direction, not shown in figure 3) at an angle, e.g. perpendicular, to the first direction to achieve overlapping processing traces on the substrate.

With such a system the removal of the additives is achieved with one single treatment of the coating. Besides the removal of additives the generated coating matrix needs to be sintered. The sintering is a time and temperature dependent process that leads to an increase of the mechanical stability of the coating with time. The required mechanical stability of the coating matrix cannot be achieved within the very short temperature interaction time of one single scanning line treatment. In order to achieve the required temperature interaction time with a significantly reduced thermal load of the substrate, a particular temperature-time profile is realized according to the present method. This specific temperature-time profile is based on the repeated heating to high peak temperatures which are only maintained during very short times.

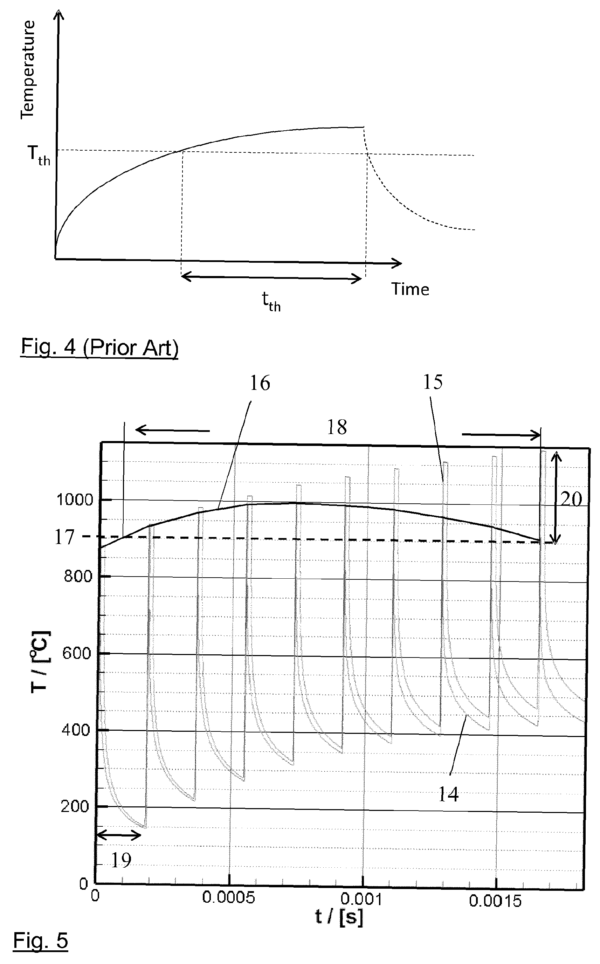

Figure 4 shows a schematic diagram of the temperature-time profile for sintering according to the prior art in which the sintering is performed in a furnace. The coating is heated above a threshold temperature $T_{th}$. The threshold temperature relates to the temperature value that needs to be exceeded in order to initiate the processes responsible for the conversion of the coating, i.e. for the sintering process in the present example. The temperature of the coating is then maintained above the threshold temperature for a time period $t_{th}$ which is typically in the range of minutes to hours. If such a temperature time profile according to figure 4 is carried out by a laser treatment e.g. by slowly moving a laser beam along a scanning line on the substrate, this leads to a high thermal load of the substrate. The high thermal load on the other hand results in a large heat penetration depth and a large heat affected zone. The thermal expansion of all volume elements within the heat affected zone sum up to the overall thermal expansion. In case of a large laser spot with dimensions in the millimeter range this leads to 3-dimensional tensile states in the substrate which may cause cracking of the substrate in case of a glass or ceramic substrate. Using a small laser spot in the micrometer range and a glass substrate, the overall thermal expansion leads to localized microcrack formation. In contrast to this the present method does not cause such problems due to a different temperature-time profile.

By applying the method of laser treatment according to the present invention, the thermal load on the substrate is substantially reduced. The proposed temperature-time profile is achieved by scanning the coating with the laser beam along overlapping processing traces in a first direction with a high scanning speed while moving the substrate with the coating with a substantially slower speed relative to the laser beam or vice versa in a second direction perpendicular to the first direction. The intensity of the laser beam, the first and second speeds are selected such that the overlap of the processing traces on the coating results in local peak temperatures of the coating above a threshold temperature which are repeatedly reached within a time period (threshold time period). The peak temperatures and threshold time period are selected to achieve the desired sintering. Due to the high peak temperatures which are only reached for very short times, the large decrease of the temperature between the peak temperatures and the deposition of the energy in only small parts with laser radiation, the thermal load of the substrate is substantially reduced while the sintering process is still performed.

The interrupted deposition of the energy could be done by pulsed laser radiation. In order to achieve industrially relevant processing rates however, the required laser source would need to deliver very high pulse repetition frequencies in connection with a very high average output power. Such laser sources are not available for a reasonable price. Therefore, in a preferred embodiment of the proposed method the coating is scanned with a laser beam of continuous wave (cw) laser radiation. This allows such industrially relevant processing rates at lower costs for the laser equipment.

Figure 5 shows an example of such multiple overlapping treatments that lead to a laser induced temperature distribution with high peak temperatures above a specific threshold temperature during a threshold time period required for the sintering. In this figure the temperature 14 at a fixed position on the substrate surface and the maximum process temperature on the whole substrate 15 (at the position of the laser beam) are shown during a time period of 10 overlapping scans. The diagram is the result of a FEM (Finite Element Method) simulation of multiple overlapping treatments. The simulation is based on the numerical solution of the time-dependent heat equation with temperature dependent material properties (density, heat capacity, heat conductivity).

$$\frac{\partial(\rho \cdot c_p \cdot T)}{\partial t} = div(\lambda \cdot \nabla T) + Q(\vec{x} - \vec{x_P}(t))$$

with $c_p$: heat capacity, $\rho$: density, $\lambda$: heat conductivity,

$\delta$: optical penetration depth,

*Q: heat source and* $\vec{x_P}(t)$: *of Laser beam, $P_L$: laser power,*

$r_G$: *beam radius of Laser beam.*

$$Q = \frac{2 \cdot P_L}{\pi \cdot r_G^2} \cdot \exp(-2 \cdot \frac{r^2}{r_G^2}) \cdot \exp(\frac{z}{\delta})$$

For the simulation a temperature gradient adopted mesh is used. Additionally within the laser material interaction zone the discretization of nodes in the z-direction is sufficiently fine to approximate the thermalization of laser energy according to the lambert law. As can be seen from the figure, the peak temperatures at a fixed position on the substrate surface due to the overlapping scans first increase and then decrease with time. The envelope 16 of these peak temperatures is indicated by a corresponding line. The threshold temperature 17 is also indicated in the figure. This threshold temperature 17 is repeatedly reached or exceeded by the peak temperatures at the fixed position within the threshold time period 18 of approx. 1.5 ms in this example. Such a short threshold time period in the ms-range in connection with the high peak temperatures of > 1000°C is sufficient for the sintering of a sol-gel matrix. The time period 19 between two scans is also indicated in the figure as well as the temperature difference 19 between the fixed position and the hottest position on the substrate.

A value characterizing the number of overlapping treatments or scans is the quotient n, that can theoretically be calculated by $n = \dfrac{d_{beam}}{d_y} = \dfrac{d_{beam} \cdot v_x}{width_{scan} \cdot v_y}$ with $d_{ream}$ being the beam diameter or length of the beam in the direction of the substrate velocity (y-direction), $d_y$ being the distance between two scanning vectors, $v_x$ being the scanning velocity of the beam in the first direction (x-direction), $v_y$ being the substrate velocity in the second direction (y-direction) perpendicular to first velocity and $width_{scan}$ being the scanning width (length of a scanning line).

With the following description n will be used to relate to the number of overlapping treatments. It has to be kept in mind that the effective number of overlapping treatments resulting from the generated temperature distribution can be lower (compare figure 5).

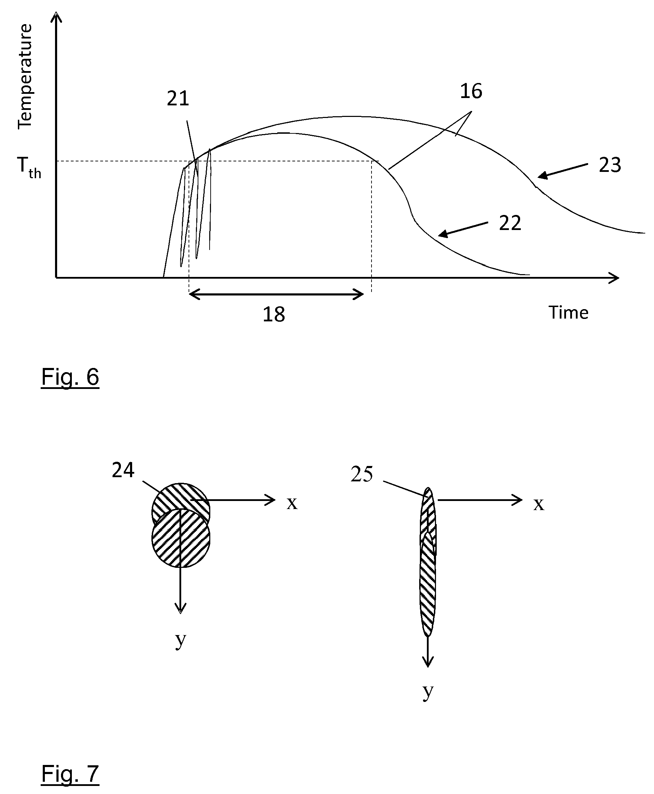

Due to the fact that sintering is a temperature and time dependent process, it is beneficial to generate a temperature-time distribution with a longer threshold time period. Figure 6 shows a schematic diagram of the temperature-time profile according to the proposed method at a fixed position on the substrate or coating generated by multiple overlapping laser treatments for two different scanning speeds (first speed). The repeated reaching of the peak temperatures is only indicated schematically in this figure by the first three scanning treatments 21 corresponding to three overlapping processing traces. In this figure a first strategy 22 with a shorter threshold time period 18 and a second strategy 23 with a longer threshold time period 18 are indicated by the envelopes 16. The second strategy could be realized by a slower substrate velocity (second speed) perpendicular to the scanning direction (first direction) of the laser beam. This strategy would usually lead to a higher thermal load of the substrate and could therefore cause a negative effect on the substrate, e.g. result in microcrack formation. According to the proposed method the realization of the second strategy with a longer threshold time period 18 is only possible in combination with a reduction of the temperature penetration depth and the overall deposited energy at the same time. This is done by increasing the scanning velocity (first speed) and at the same time increasing the intensity of the laser beam. The thermal load of the substrate can be further reduced by forced cooling, e.g. by a process gas supply to the laser treated area. The forced cooling leads to convective heat loss away from the laser treated area. This heat does not contribute to the thermal load of the substrate. Although the supply of a gas to the treated area is preferred, the forced cooling could also be carried out by suction of gas from the area near the laser interaction.

In an exemplary application of the proposed method, the curing may be performed with a silica-based sol-gel material with polymeric additives like the material DSM AR T1 coating (formerly marked as "Khepricoat®") developed and distributed by DSM, Koninklijke DSM N. V.. This material is deposited on a glass substrate of 3 mm thick float glass in order to produce a coating with antireflective properties. The antireflective properties are generated by conversion of this coating into a silica coating with defined porosity. The defined porosity, originating from the additives with organic/inorganic core/shell structure results in a refractive index $N_{coating} < N_{glass-sllbstrate}$. Such compositions have been described in numerous publications, including EP 0597490, US 4830879; US 5858462, EP 1181256, WO 2007/093339, WO 2008/028640, EP 1674891, WO 2009/030703 and WO 2011/157820.

In the above exemplary application the proposed method has been applied using a $CO_2$ laser system together with a polygon scanner. The first direction was selected perpendicular to the second direction. The laser and scanning parameters used for the conversion of the coating are:

- Output power of the laser: 4000 W
- Intensity of the laser beam: $4.2 * 10^5$ W/cm$^2$
- Scanning speed (first direction): 1465 m/s
- Second speed (second direction): 20 m/s
- Processing gas: air

By this laser treatment the coating has been functionalized achieving significant antireflective properties.

Within the initial process stage the organic core components of the additives are removed and the porosity required for antireflective properties is generated. In the further course of the thermal treatment a sintering of the silica-based network formed by the sol-gel precursors leads to the required increase of the mechanical abrasion resistance of the coating. Both process stages are conventionally carried out within one single pass in a furnace and take several minutes of processing time at temperatures >600°C. This leads to several restrictions regarding the production process, e.g. due to glass hardening condition, assembling procedure and so on.

By performing the process with the proposed method these drawbacks are overcome. With a continuous $CO_2$-laser intensity of $6.3 \times 10^5$ W/cm$^2$ at a wavelength of 10.6 $\mu$m and a specifically adapted beam guiding strategy with a scanning velocity of $v_{scan}$ = 600 m/s (first scanning speed) the removal of organic components and the sintering of the coating matrix is carried out without negative effect on the glass substrate. For the conversion into a functional coating with suitable optical and mechanical properties the calculated number of overlapping treatments n needs to be in the range 15 < n < 100.

In order to realize sufficient overlapping treatments at an industrially relevant processing rate it is advantageous to design the laser beam profile to have a longer dimension parallel to the substrate movement direction (second direction) and a shorter dimension parallel to the beam scanning direction (first direction). This is exemplary indicated in figure 7. Figure 7 shows on the left hand side two overlapping normal beam profiles 24 having a circular shape and on the right hand side two overlapping preferred beam profiles 25 having an elongated shape. The first direction (x-direction) with the high scanning speed and the second direction (y-direction) with the slow scanning or moving speed are also indicated.

The mechanical stability of the laser treated coating depends directly on the number of overlapping treatments. Thus, with a given specific laser spot geometry a specific combination of the polygon speed and the axis speed leads to the required mechanical stability (sintering).

List of Reference Signs

| | |
|---|---|
| 1 | substrate |
| 2 | sol-gel matrix |
| 3 | additives |
| 4 | heating step |
| 5 | porosity |
| 6 | sintering step |
| 7 | sintered silica material |
| 8 | laser beam |
| 9 | heated zone in coating |
| 10 | heated zone in substrate |
| 11 | polygon mirror |
| 12 | scanning width |
| 13 | scanning angle |
| 14 | temperature at fixed position |
| 15 | maximum process temperature |
| 16 | envelope of peak temperatures |
| 17 | threshold temperature |
| 18 | threshold time period |
| 19 | time period between two scans |
| 20 | temperature difference between hottest position and fixed position |
| 21 | first three scanning treatments |
| 22 | first strategy |
| 23 | second strategy |
| 24 | circular beam profile |
| 25 | preferred beam profile |

**Claims**

1. A method of at least one of sintering, crystallizing and crosslinking of a coating material (2) on a substrate (1) with laser radiation,
   in which the coating material (2) is scanned with a laser beam (8) along overlapping processing traces,

- said scanning being performed by moving the laser beam (8) over the substrate with a first speed in a first direction while the substrate (1) is moved with a second speed slower than the first speed relative to the laser beam (8) or vice versa in a second direction at an angle to the first direction,
- wherein an intensity of the laser beam (8), the first speed and a ratio of the first speed and the second speed are selected such that the overlap of the processing traces on the coating material (2) results in local peak temperatures of the coating material (2) above a threshold temperature (17) which are repeatedly reached within a time period (18), said local peak temperatures and time period (18) being selected to achieve said sintering, crystallizing and/or cross linking of the coating material (2).

2. The method according to claim 1,
   wherein forced cooling with a process gas is applied to the coating material (2) during scanning with the laser beam (8).

3. The method according to claim 2,
   wherein $N_2$, $O_2$ or air is used as the process gas for forced cooling.

4. The method according to any of claims 1 to 3,
   wherein the threshold temperature (17) is selected to be above or equal 600 °C.

5. The method according to any of claims 1 to 4,
   wherein the intensity of the laser beam (8), the first speed and the ratio of the first speed and the second speed are selected to achieve peak temperatures of the coating material (2) of above 1000 °C.

6. The method according to any of claims 1 to 5,
   wherein the first speed is selected to be between 50 and 2500 m/s.

7. The method according to any of claims 1 to 6,
   wherein the intensity of the laser beam (8) is selected to be between $1*10^5$ and $5*10^7$ W/cm$^2$.

8. The method according to any of claims 1 to 7,
   wherein the laser beam (8) is formed to have a top-hat shaped intensity distribution on the coating material (2).

9. The method according to any of claims 1 to 8,
   wherein the laser beam (8) is formed to have an intensity distribution with a larger extension in the second than in the first direction at each position on the coating material (2).

10. The method according to any of claims 1 to 9,
    wherein the overlap of the processing traces on the coating material (2) is selected such that each processing trace overlaps with a number of > 15, preferably > 25, more preferably > 40, more preferably > 50 further processing traces.

11. The method according to claim 10,
    wherein the overlap of the processing traces on the coating material (2) is selected such that each processing trace overlaps with a number of < 150 further processing traces.

12. The method according to any of claims 1 to 11,
    wherein the coating material (2) is scanned with a laser beam (8) of cw laser radiation.

13. The method according to any of claims 1 to 12,
    wherein said coating material (2) is a Sol-Gel material.

3

2

4 →

5

6 →

7

1

<u>Fig. 1 (Prior Art)</u>

8

2

1

9

10

<u>Fig. 2</u>

8

11

13

12

1

<u>Fig. 3</u>

x

Fig. 4 (Prior Art)

Fig. 5

Temperature

21

16

T_th

23

22

18

Time

Fig. 6

24

x

y

25

x

y

Fig. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 257 438 A (BRITISH TECH GROUP [GB]) 13 January 1993 (1993-01-13) * abstract * * page 13, line 25 - page 14, line 32 * * page 4, line 14 - page 5, line 1 * ----- | 1-13 | INV. C23C18/12 B23K26/08 |
| X | LIU H ET AL: "Effects of laser nanocrystallisation on the wear behaviour of electroless Ni-W-P", SURFACE AND COATINGS TECHNOLOGY, ELSEVIER BV, AMSTERDAM, NL, vol. 219, 11 January 2013 (2013-01-11), pages 31-41, XP028997761, ISSN: 0257-8972, DOI: 10.1016/J.SURFCOAT.2012.12.048 * abstract * * paragraph [0002] * * paragraph [03.4]; figure 10 * ----- | 1-13 | |
| A | JP 2012 143787 A (HITACHI HIGH TECH CORP) 2 August 2012 (2012-08-02) * abstract * * figures 1-4, 8, 9 * ----- | 1-13 | TECHNICAL FIELDS SEARCHED (IPC) C23C B23K C03C |

The present search report has been drawn up for all claims

| Place of search | Date of completion of the search | Examiner |
|---|---|---|
| The Hague | 31 August 2016 | Picard, Sybille |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 16 15 6867

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2016

| Patent document cited in search report | | Publication date | Patent family member(s) | | Publication date |
|---|---|---|---|---|---|
| GB 2257438 | A | 13-01-1993 | DE | 69211556 D1 | 18-07-1996 |
| | | | DE | 69211556 T2 | 05-12-1996 |
| | | | EP | 0595840 A1 | 11-05-1994 |
| | | | ES | 2090661 T3 | 16-10-1996 |
| | | | GB | 2257438 A | 13-01-1993 |
| | | | JP | H06509089 A | 13-10-1994 |
| | | | US | 5433941 A | 18-07-1995 |
| | | | WO | 9300879 A1 | 21-01-1993 |
| JP 2012143787 | A | 02-08-2012 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100015433 A1
- EP 0597490 A
- US 4830879 A
- US 5858462 A
- EP 1181256 A
- WO 2007093339 A
- WO 2008028640 A
- EP 1674891 A
- WO 2009030703 A
- WO 2011157820 A

**Non-patent literature cited in the description**

- **MAHADIK et al.** High performance single layer nano-porous antireflection coatings on glass by sol-gel process for solar energy applications. *Solar Energy Materials & Solar Cells,* 2015, vol. 140, 61-68